# FASCICULE DE BREVET EUROPEEN

(11) **EP 4 493 417 B1**
(45) Date de publication et mention de la délivrance du brevet: **06.05.2026**
(21) Numéro de dépôt: 23709425.5
(22) Date de dépôt: 09.03.2023
(51) Int. Cl.: B60C 1/00, C08L 7/00, C08L 63/00, C08K 5/1515, C08K 5/36, C08K 5/18, C08K 5/21

(54) **COMPOSITION DE CAOUTCHOUC COMPRENANT UNE RÉSINE ÉPOXYDE ET UN DURCISSEUR**
KAUTSCHUKZUSAMMENSETZUNG MIT EINEM EPOXIDHARZ UND EINEM HÄRTER
RUBBER COMPOSITION COMPRISING AN EPOXY RESIN AND A HARDENER

(30) Priorité: 15.03.2022 FR 2202256
(43) Date de publication de la demande: 22.01.2025
(73) Titulaire: COMPAGNIE GENERALE DES ETABLISSEMENTS MICHELIN, 63000 Clermont-Ferrand (FR)
(72) Inventeur: BONNETTE, Fabien, 63040 CLERMONT-FERRAND CEDEX 09 (FR); BIZET, Séverine, 63040 CLERMONT-FERRAND CEDEX 09 (FR); BONNEVIDE, Marine, 63040 CLERMONT-FERRAND CEDEX 09 (FR); LANDREAU, Emmanuel, 63040 CLERMONT-FERRAND CEDEX 09 (FR)
(74) Mandataire: M.F.P. Michelin
(86) Numéro de dépôt international: PCT/EP2023/055990
(87) Numéro de publication internationale: WO 2023/174788

(56) Documents cités:
- WO-A1-2021/000918
- WO-A1-2021/005719
- FR-A1- 3 053 344

## Description

### Domaine technique de l'invention

La présente invention est relative à des compositions de caoutchouc destinées notamment à la fabrication de pneumatiques ou de produits semi-finis pour pneumatiques. La présente invention a également pour objet un article de caoutchouc fini ou semi-fini comprenant une composition de caoutchouc selon l'invention, ainsi qu'un bandage pneumatique ou non pneumatique comprenant au moins une composition selon l'invention.

### Art antérieur

Il est connu d'utiliser dans certaines parties des bandages pneumatiques, des compositions de caoutchouc présentant une forte rigidité lors de faibles déformations du bandage pneumatique comme présentées dans la demande WO 02/10269. La résistance aux faibles déformations est une des propriétés que doit présenter un bandage pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du bandage pneumatique.

Les résines renforçantes classiquement utilisées pour augmenter la rigidité des compositions sont des résines renforçantes à base d'un système accepteur/donneur de méthylène. Les termes « accepteur de méthylène » et « donneur de méthylène » sont bien connus de l'homme du métier et largement utilisés pour désigner des composés aptes à réagir ensemble pour générer par condensation une résine renforçante tridimensionnelle qui vient se superposer, s'interpénétrer avec le réseau charge renforçante/élastomère d'une part et avec le réseau élastomère/soufre d'autre part (si l'agent de réticulation est le soufre). Classiquement, l'accepteur de méthylène est une résine phénolique. Des résines phénoliques novolaques, ont déjà été décrites dans des compositions de caoutchouc, notamment destinées à des bandages pneumatiques ou des bandes de roulement de bandages pneumatiques, pour des applications aussi variées qu'adhésion ou renforcement : on se reportera par exemple au brevet EP 0 649 446.

À l'accepteur de méthylène précédemment décrit est associé un agent durcisseur, apte à le réticuler ou durcir, encore appelé communément « donneur de méthylène » ou simplement « durcisseur ». La réticulation de la résine est alors provoquée lors de la cuisson de la matrice de caoutchouc, par formation de ponts méthylène entre les carbones en positions ortho et para des noyaux phénoliques de la résine et le donneur de méthylène, créant ainsi un réseau de résine tridimensionnel.

À titre d'exemple, la demande WO 2011/045342 décrit des compositions comprenant un couple résine époxyde avec un durcisseur aminé. Ces compositions, outre l'avantage de s'affranchir de la formation de formaldéhyde, présentent après réticulation des rigidités supérieures aux compositions conventionnelles tout en conservant une résistance au roulement acceptable. La demande WO 2018/002538 décrit des compositions comprenant une résine époxyde et un durcisseur aminé comprenant au moins deux fonctions amines primaires situées sur au moins un cycle aromatique à six atomes qui visent à améliorer le compromis entre processabilité, en particulier le temps de grillage, et rigidité par rapport aux compositions connues. Ces documents montrent que les propriétés de caoutchouterie sont dépendantes des constituants utilisés et difficilement prédictibles.

Il est toujours souhaitable d'améliorer encore les propriétés des compositions de caoutchouc, et notamment le compromis entre rigidité aux faibles déformations et pertes hystérétiques.

De manière inattendue, la Demanderesse a découvert lors de ses recherches que la combinaison d'une résine époxyde de structure particulière et d'un durcisseur permet d'améliorer la rigidité aux faibles déformations et les pertes hystérétiques d'une composition de caoutchouc.

### Description détaillée de l'invention

L'invention concerne une composition de caoutchouc à base d'au moins :
- un élastomère diénique ;
- une charge renforçante ;
- un système de réticulation ;
- entre 1 et 30 pce d'une résine époxyde choisie parmi les résines époxyde de type tétra(glycidoxyphényl)éthane
- de 0,5 à 15 pce d'un durcisseur.

L'invention concerne également un article de caoutchouc fini ou semi-fini comprenant une telle composition et un bandage pneumatique ou non pneumatique comprenant une telle composition.

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression "composition à base de", il faut entendre une composition comprenant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

### Élastomère diénique

La composition selon l'invention comprend au moins un élastomère diénique. Elle peut donc contenir un seul élastomère diénique ou un mélange de plusieurs élastomères diéniques.

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
a) tout homopolymère d'un monomère diène, conjugué ou non, ayant de 4 à 18 atomes de carbone ;
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le para-tertiobutylstyrène.

À titre d'α-monooléfines aliphatiques conviennent notamment les α-monooléfines aliphatiques acycliques ayant de 3 à 18 atomes de carbone.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges ; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Préférentiellement le taux d'élastomère diénique, de préférence d'élastomère isoprénique, de préférence le caoutchouc naturel, est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce. En particulier le taux d'élastomère diénique, de préférence d'élastomère isoprénique, de préférence encore de caoutchouc naturel, est très préférentiellement de 100 pce.

Qu'elle contienne un seul élastomère diénique ou un mélange de plusieurs élastomères diéniques, la composition de caoutchouc selon l'invention peut également contenir de manière minoritaire tout type d'élastomère synthétique autre que diénique, voire des polymères autres que des élastomères, par exemple des polymères thermoplastiques. De préférence, la composition de caoutchouc selon l'invention ne contient pas d'élastomère synthétique autre que diénique ni de polymère autre que des élastomères ou en contient moins de 10 pce, de préférence moins de 5 pce.

### Résine époxyde

La composition de caoutchouc selon l'invention comprend une résine époxyde choisie parmi les résines époxyde de type tétra(glycidoxyphényl)éthane.

Par « résine époxyde de type tétra(glycidoxyphényl)éthane, on entend des résines à base de motifs tétra(glycidoxyphényl)éthane, c'est-à-dire comprenant ces constituants, ou les oligomères de ces constituants.

La résine époxyde est une résine durcissante. Par résine durcissante on entend une résine qui, lorsqu'elle est incorporée à une composition de caoutchouc avec un agent durcisseur, permet d'augmenter la rigidité de la composition de caoutchouc. Or l'augmentation de la rigidité d'une composition de caoutchouc va généralement de pair avec une augmentation des pertes hystérétiques.

La demanderesse a découvert que, de manière surprenante, la structure particulière de ces résines permettait d'améliorer le compromis rigidité/hystérèse par rapport à d'autres résines époxydes utilisées comme additif dans des compositions de caoutchouc.

Les résines mises en œuvre dans le cadre de l'invention sont préférentiellement choisies parmi les résines époxydes de formule générique (II) suivantes et leurs dérivés, c'est-à-dire les oligomères des composés de formule générique (II) :

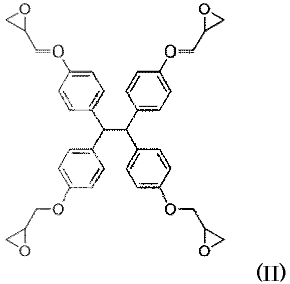

À titre d'exemples de telles résines disponibles commercialement, on peut citer la résine « EPON 1031 » de la société Hexion.

De préférence, la composition selon l'invention ne comprend pas de résines durcissantes autre que une résine époxyde choisie parmi les résines époxyde de type tétra(glycidoxyphényl)éthane et leurs mélanges.

La composition selon l'invention comprend entre 1 et 30 pce de résine époxyde, préférentiellement de 10 à 25 pce de résine époxyde. Ces teneurs permettent d'assurer une rigidification suffisante de la composition de caoutchouc tout en permettant à celle-ci de conserver un comportement de type élastique une fois réticulée.

### Durcisseur

La composition de caoutchouc selon l'invention comprend de 0,5 à 15 pce d'un durcisseur. Comme durcisseur peut convenir tout durcisseur apte à réticuler la résine époxyde mise en œuvre dans les compositions de caoutchouc selon l'invention. En particulier, le durcisseur peut être choisi parmi les diamines aromatiques, les diamines aliphatiques, anhydride tels que par exemple l'anhydride benzoïque ou l'anhydride maléique, et les urées.

Les urées sont des composés de formule générale (R₁, R₂)N-CO-N(R₃, R₄) dans laquelle chaque radical R₁, R₂, R₃ et R₄ est choisi indépendamment dans le groupe constitué par :
- un atome d'hydrogène,
- un radical alkyle ayant de 1 à 20 atomes de carbone,
- un radical cycloalkyle ayant de 5 à 24 atomes de carbone,
- un radical aryle ayant de 6 à 30 atomes de carbone et
- un radical aralkyle ayant de 7 à 25 atomes de carbone,
les radicaux R₂ et R₃ pouvant former ensemble un cycle, chaque radical R₁, R₂, R₃ et R₄ étant éventuellement interrompu par un ou plusieurs hétéroatomes et/ou substitué.

Dans la formule générale (R₁, R₂)N-CO-N(R₃, R₄), on comprend que le groupe CO représente un atome de carbone lié par une double liaison à un atome d'oxygène, que le groupe (R₁, R₂)N (respectivement N(Rs, R₄)) représente un atome d'azote lié à un groupe R₁ et à un groupe R₂ par une liaison covalente. Une telle molécule est représentée ci-dessous.

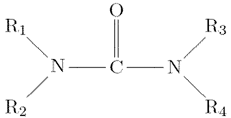

De préférence, le durcisseur est choisi parmi les diamines aromatiques et les urées. Ces familles de durcisseur présentent en effet un compromis vitesse de réticulation lors de la cuisson/rigidité du produit réticulé particulièrement intéressant pour les compositions selon l'invention.

Très préférentiellement, selon l'invention, le durcisseur diamine aromatique est choisi dans le groupe constitué par les composés ci-dessous et les mélanges de ces composés :

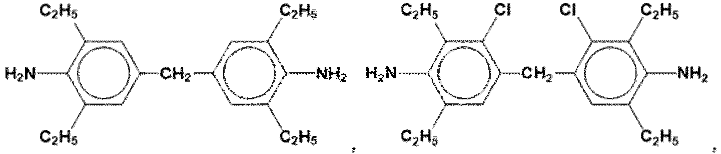

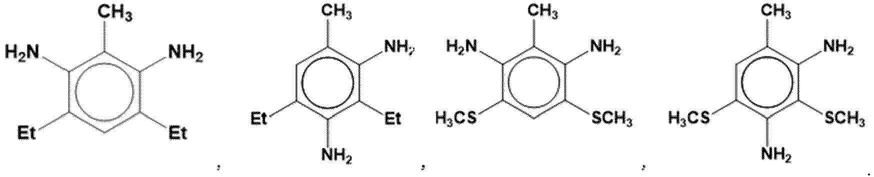

A titre d'exemple de durcisseurs aminés disponibles dans le commerce et utilisables dans le cadre de la présente invention, on peut citer par exemple l'« Ethacure 100 » ou l'« Ethacure 300 » de la société Albemarle, le « Lonzacure DETDA », le « Lonzacure MDEA » ou le « Lonzacure MCDEA » de la société Lonza.

Très préférentiellement, selon l'invention, les urées sont choisies parmi les composés carbamide, N, N'-diméthylurée, éthylèneurée, N-phénylurée, 1,3-diphénylurée, de manière préférée choisies parmi les composés urée, N, N'-diméthylurée, N-phénylurée, 1,3-diphénylurée et de manière très préférée choisies parmi les composés carbamide et N, N'-diméthylurée et très préférentiellement sont le carbamide, également appelée urée, de formule H₂N-CO-NH₂.

De préférence, les urées ne comprennent pas de noyau aromatique.

De manière préférée, chaque radical R₁, R₂, R₃ et R₄ est un atome d'hydrogène. Le composé de formule H₂N-CO-NH₂ est couramment désigné sous le terme « urée » ou « carbamide ».

De manière préférée, le durcisseur est choisi parmi les composés diméthylthiotoluènediamine, carbamide et N, N'-diméthylurée, préférentiellement parmi les composés diméthylthiotoluènediamine et carbamide.

La quantité de durcisseur dans la composition de caoutchouc est comprise dans un domaine allant de 0,5 à 15 pce. En dessous du minimum indiqué, l'effet technique visé s'est révélé insuffisant, alors qu'au-delà du maximum indiqué, on s'expose à des risques de pénalisation de la mise en œuvre à l'état cru des compositions. Préférentiellement, le taux de durcisseur est compris dans un domaine allant de 0,5 à 10 pce, de préférence compris dans un domaine allant de 0,5 à 8 pce.

### Charge renforçante

La composition selon l'invention comprend une charge renforçante.

La charge renforçante peut comprendre tout type de charge renforçante connue pour ses capacités à renforcer une composition de caoutchouc utilisable pour la fabrication de bandages pneumatiques, par exemple une charge organique telle que du noir de carbone, une charge inorganique renforçante telle que de la silice, ou un mélange de noir de carbone et de charge inorganique renforçante. Plus préférentiellement, la charge renforçante comprend majoritairement, très préférentiellement exclusivement, du noir de carbone, en particulier dans le cas où la composition est utilisée dans une couche interne. La charge renforçante peut également comprendre majoritairement une charge inorganique renforçante, en particulier dans le cas où la composition est utilisée dans une bande de roulement.

Une telle charge renforçante consiste typiquement en des particules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs du type HAF, ISAF, SAF conventionnellement utilisés dans les bandages pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titre de silices précipitées hautement dispersibles (dites "HDS"), on citera par exemple les silices « Ultrasil 7000 » et « Ultrasil 7005 » de la société Degussa, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

La surface spécifique BET de la silice est déterminée de manière connue par adsorption de gaz à l'aide de la méthode de Brunauer-Emmett-Teller décrite dans " The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17). La surface spécifique CTAB de la silice est déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

La teneur en agent de couplage est préférentiellement inférieure à 12 pce, étant entendu qu'il est en général souhaitable d'en utiliser le moins possible. Typiquement lorsque qu'une charge inorganique renforçante est présente, le taux d'agent de couplage représente de 0,5% à 15% en poids par rapport à la quantité de charge inorganique. Son taux est préférentiellement compris dans un domaine allant de 0,5 à 15 pce. Ce taux est aisément ajusté par l'homme du métier selon le taux de charge inorganique utilisé dans la composition.

Selon l'invention, lorsque la charge renforçante est présente, le taux de charge renforçante, de préférence la charge renforçante comprenant majoritairement, voire exclusivement du noir de carbone, peut être compris dans un domaine allant de 20 à 200 pce, de préférence de 30 à 150 pce, de préférence de 40 à 100 pce, de préférence de 50 à 80 pce.

### Système de réticulation

Le système de réticulation peut être tout type de système connu de l'homme de l'art dans le domaine des compositions de caoutchouc pour bandage pneumatique. Il peut notamment être à base de soufre, et/ou de peroxyde et/ou de bismaléimides.

De manière préférentielle, le système de réticulation est à base de soufre. On parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 8,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

Les compositions de caoutchouc conformes à l'invention peuvent comporter également tout ou partie des additifs et agents de mise en œuvre usuels, connus de l'homme de l'art et habituellement utilisés dans les compositions de caoutchouc pour bandages pneumatiques, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue.

De manière préférée, la composition selon l'invention ne comprend pas de composés nitriles ou en comprend moins de 10 pce, de préférence moins de 5 pce, de manière préférée moins de 2 pce, de manière très préférée moins de 1 pce et encore plus préférentiellement moins de 0,5 pce.

La composition peut être soit à l'état cru (avant réticulation ou vulcanisation), soit à l'état cuit (après réticulation ou vulcanisation).

### Article de caoutchouc fini ou semi-fini et bandage pneumatique

La présente invention a également pour objet un article de caoutchouc fini ou semi-fini comprenant une composition selon l'invention. Par article semi-fini, on entend un article destiné à être utilisé comme élément de construction d'un article fini.

La présente invention a également pour objet un bandage pneumatique qui comprend une composition selon l'invention.

Il est possible de définir au sein du bandage pneumatique trois types de zones :
- La zone radialement extérieure et en contact avec l'air ambiant, comprenant les couches dites couches externes, ces couches comprenant essentiellement la bande de roulement et le flanc externe du bandage pneumatique. Un flanc externe est une couche élastomérique disposée à l'extérieur de l'armature de carcasse par rapport à la cavité interne du bandage pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du bandage pneumatique, c'est-à-dire celle comprise entre les zones extérieure et intérieure. Cette zone inclut des couches ou nappes qui sont appelées ici couches internes du bandage pneumatique. Ce sont par exemple des nappes carcasses, des sous-couches de bande de roulement, des nappes de ceintures de bandage pneumatiques ou tout autre couche qui n'est pas en contact avec l'air ambiant ou le gaz de gonflage du bandage pneumatique.

La composition définie dans la présente description est particulièrement bien adaptée aux couches internes et externes des bandages pneumatiques, et en particulier, pour les couches externes, aux compositions de bande de roulement.

Selon l'invention, la couche interne peut être choisie dans le groupe constitué par les nappes carcasse, les nappes sommet, les bourrages-tringle, les pieds sommets, les couches de découplage, les gommes de bordure, les gommes de bourrage, la sous-couche de bande de roulement et les combinaisons de ces couches internes. De préférence, la couche interne est choisie dans le groupe constitué par les nappes carcasses, les nappes sommet, les bourrages-tringle, les pieds sommets, les couches de découplage et les combinaisons de ces couches internes.

La composition selon l'invention peut également convenir pour les couches internes et externes de bandages non pneumatiques, en particulier pour les bandes de roulement de bandages non pneumatiques. On rappelle qu'un bandage non pneumatique est un bandage qui supporte la charge d'un véhicule par un moyen autre qu'un gaz de gonflage pressurisé, par exemple au moyen de haubans semi-rigides.

L'invention concerne particulièrement des bandages destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

L'invention concerne les articles comprenant une composition de caoutchouc selon l'invention, tant à l'état cru (c'est à dire, avant cuisson) qu'à l'état cuit (c'est à dire, après réticulation ou vulcanisation).

### Préparation des compositions de caoutchouc

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, les charges, les éventuels autres additifs divers, à l'exception du système de réticulation. L'incorporation de la charge à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation.

La phase non-productive est réalisée à haute température, jusqu'à une température maximale comprise entre 110°C et 190°C, de préférence entre 130°C et 180°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 110°C, par exemple entre 40°C et 100°C. On incorpore alors le système de réticulation, et le tout est alors mélangé pendant quelques minutes, par exemple entre 2 et 15 min.

Le procédé pour préparer de telles compositions comporte par exemple les étapes suivantes :
a) incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
b) refroidir l'ensemble à une température inférieure à 100°C ;
c) incorporer ensuite, au cours d'une seconde étape (dite "productive"), un système de réticulation ;
d) malaxer le tout jusqu'à une température maximale inférieure à 110°C.

Entre 1 et 30 pce de la résine époxyde et de 0,5 et 15 pce de durcisseur peuvent être introduits, indépendamment les uns des autres, soit durant la phase non-productive (a), soit durant la phase productive (c). De préférence, la résine époxyde est introduite lors de la phase non productive (a) tandis que le durcisseur est introduit lors de la phase productive (c).

La composition finale ainsi obtenue peut ensuite être calandrée, par exemple sous la forme d'une feuille, d'une plaque notamment pour une caractérisation au laboratoire, ou encore extrudée sous la forme d'un semi-fini (ou profilé) de caoutchouc utilisé pour la fabrication d'un bandage pneumatique.

La réticulation de la composition peut être conduite de manière connue de l'homme du métier, par exemple à une température comprise entre 120°C et 200°C, sous pression.

### Exemples

### Mesures et tests utilisés

### Essais de traction

Les essais ont été effectués conformément à la norme française NF T 46-002 de septembre 1988. Toutes les mesures de traction ont été effectuées à une température représentative de la température de fonctionnement de la composition en pneumatique (100±2°C) et dans des conditions normales d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA10, sur des échantillons cuits à t₉₅ à 150°C. Le temps de cuisson de chaque échantillon dit « t₉₅ » est le temps nécessaire pour atteindre 95% du couple maximal, déterminé selon la norme DIN 53529, avec un rhéomètre à chambre oscillante de type MCCS « C » (chambre de mesure de type parallèle). L'évolution du couple rhéométrique en fonction du temps décrit l'évolution de la rigidification de la composition lors de la réticulation. Un analyseur de type RPA peut également être utilisé.

### Pertes au choc

La résistance au roulement induite par la composition testée est estimée par la mesure des pertes d'énergie par mesure, à une température de 60°C, de l'énergie restituée au huitième rebond d'un échantillon auquel on a imposé une énergie initiale, telle que décrite dans la norme DIN 53-512 d'avril 2000. Cette mesure est notée P60 et calculée comme suit : P60(%)=100x(E0-E1)/E0, où E0 représente l'énergie initiale et E1 l'énergie restituée. Plus cette valeur est faible, et moins l'échantillon testé présente de pertes hystérétiques.

### Préparation des compositions

On procède pour les essais qui suivent de la manière suivante : on introduit dans un mélangeur interne (taux de remplissage final : environ 70% en volume), dont la température initiale de cuve est d'environ 50 °C, successivement, l'élastomère diénique, la charge renforçante, les divers autres ingrédients à l'exception du système de réticulation et de la résine époxyde, puis finalement la résine époxyde. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre, un accélérateur type sulfénamide et le durcisseur, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

La réticulation de la composition est conduite à une température de 150°C, pendant une durée correspondante au t₉₅ sous pression.

### Essais de compositions de caoutchouc

Six compositions de caoutchouc ont été préparées comme indiqué précédemment. Leurs formulations (en pce) et leurs propriétés ont été résumées dans le tableau 1 ci-après. Seule la composition C6 est conforme à l'invention.

Les compositions présentées dans ce tableau 1 n'engendrent pas la formation de formaldéhyde lors de la cuisson.

**[Tableau 1]**

| **Constituants (pce**) | **C1** | **C2** | **C3** | **C4** | **C5** | **C6** |
|---|---|---|---|---|---|---|
| NR (1) | 100.00 | 100.00 | 100.00 | 100.00 | 100.00 | 100.00 |
| Noir de carbone (2) | 70.00 | 70.00 | 70.00 | 70.00 | 70.00 | 70.00 |
| 6PPD (3) | 2.50 | 2.50 | 2.50 | 2.50 | 2.50 | 2.50 |
| Acide Stéarique (4) | 2.00 | 2.00 | 2.00 | 2.00 | 2.00 | 2.00 |
| ZnO (5) | 3.00 | 3.00 | 3.00 | 3.00 | 3.00 | 3.00 |
| CBS (6) | 2.00 | 2.00 | 2.00 | 2.00 | 2.00 | 2.00 |
| Soufre | 3.00 | 3.00 | 3.00 | 3.00 | 3.00 | 3.00 |
| Durcisseur (7) | 4.00 | 4.00 | 4.00 | 4.00 | 4.00 | 4.00 |
| Résine époxyde 1 (8) | | 12.00 | | | | |
| Résine époxyde 2 (9) | 12.00 | | | | | |
| Résine époxyde 3 (10) | | | 12.00 | | | |
| Résine époxyde 4 (11) | | | | 12.00 | | |
| Résine époxyde 5 (12) | | | | | 12.00 | |
| Résine époxyde 6 (13) | | | | | | 12.00 |

| **Propriétés à Cuit** | | | | | | |
|---|---|---|---|---|---|---|
| MA10 @ 100°C (base 100) | 100 | 72 | 116 | 115 | 123 | 101 |
| Perte au choc 60°C (Base 100) | 100 | 100 | 94 | 98 | 97 | 94 |

| | | | | | | |
|---|---|---|---|---|---|---|
| 1) Caoutchouc Naturel ; 2) Noir de carbone N326 (dénomination selon la norme ASTM D-1765) 3) N-1,3-diméthylbutyl-N-phénylparaphénylènediamine (« Santoflex 6-PPD » de la société Flexsys) 4) Stéarine (« Pristerene 4931 » de la société Uniqema) 5) Oxyde de zinc (grade industriel - société Umicore) 6) N-cyclohexyl-benzothiazyl sulphénamide (« Santocure CBS » de la société Flexsys) 7) Durcisseur « Ethacure 300 » de la société Albemarle 8) Résine époxy phénol novolaque (« EPN 1138 » de la société Huntsman) 9) Résine « Araldite 1299 » de la société Huntsman 10) Résine « EPPN-502H » de la société Nippon Kayaku 11) Résine « EPPN-501H » de la société Nippon Kayaku 12) Résine « EPPN-501HY » de la société Nippon Kayaku 13) Résine « EPON 1031 » de la société Hexion | | | | | | |

On note que les compositions conformes permettent d'obtenir des pertes moindres, donc une résistance au roulement plus faible, tout en présentant une rigidité supérieure aux compositions témoins.

## Revendications

1. Composition de caoutchouc à base d'au moins :
• un élastomère diénique ;
• une charge renforçante ;
• un système de réticulation ;
• entre 1 et 30 pce d'une résine époxyde choisie parmi les résines époxyde de type tétra(glycidoxyphényl)éthane ;
• de 0,5 à 15 pce d'un durcisseur.

2. Composition de caoutchouc selon la revendication précédente dans laquelle la résine époxyde est choisie parmi les résines époxydes de formule générique suivante et les oligomères des composés de formule générique (II) :

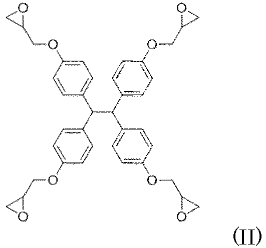

3. Composition de caoutchouc selon l'une quelconque des revendications précédentes ne comprenant pas de résines durcissantes autre qu'une résine époxyde choisie parmi les résines époxyde de type tétra(glycidoxyphényl)éthane.

4. Composition de caoutchouc selon l'une quelconque des revendications précédentes dans laquelle la teneur en résine époxyde va de 10 à 25 pce.

5. Composition de caoutchouc selon l'une quelconque des revendications précédentes dans laquelle le durcisseur est choisi parmi les diamines aromatiques, diamines aliphatiques, anhydride et urées.

6. Composition de caoutchouc selon l'une quelconque des revendications précédentes dans laquelle le durcisseur est choisi parmi les diamines aromatiques et les urées.

7. Composition de caoutchouc selon l'une quelconque des revendications précédentes dans laquelle le durcisseur est un durcisseur diamine aromatique choisi parmi les composés ci-dessous et les mélanges de ces composés :

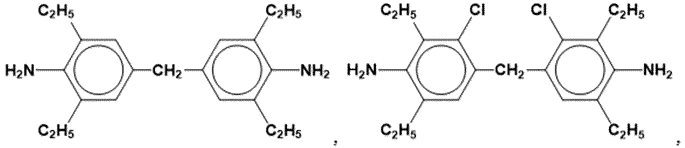

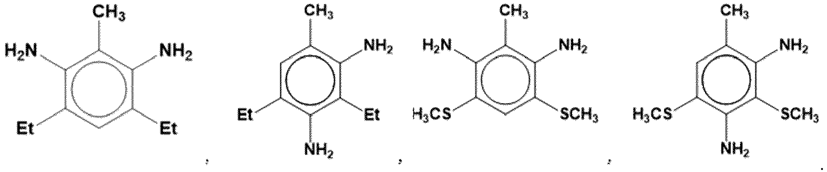

8. Composition de caoutchouc selon la revendication 5 ou 6 dans laquelle les urées sont choisies parmi les composés carbamide, N, N'-diméthylurée, éthylèneurée, N-phénylurée, 1,3-diphénylurée, de manière préférée choisies parmi les composés carbamide, N, N'-diméthylurée, N-phénylurée, 1,3-diphénylurée.

9. Composition de caoutchouc selon l'une quelconque des revendications 1 à 4 dans laquelle le durcisseur est choisi parmi les composés diméthylthiotoluènediamine, carbamide et N, N'-diméthylurée, préférentiellement parmi les composés diméthylthiotoluènediamine et carbamide.

10. Composition de caoutchouc selon l'une quelconque des revendications précédentes dans laquelle la quantité de durcisseur dans la composition de caoutchouc est comprise dans un domaine allant de 0,5 à 10 pce, de préférence compris dans un domaine allant de 0,5 à 8 pce.

11. Composition de caoutchouc selon l'une quelconque des revendications précédentes dans laquelle le taux d'élastomère diénique est de 50 à 100 pce, plus préférentiellement de 60 à 100 pce, de manière plus préférentielle de 70 à 100 pce, plus préférentiellement encore de 80 à 100 pce et de manière très préférentielle de 90 à 100 pce.

12. Composition de caoutchouc selon la revendication précédente dans laquelle l'élastomère diénique est un élastomère isoprénique.

13. Article de caoutchouc fini ou semi-fini comprenant une composition de caoutchouc selon l'une quelconque des revendications précédentes.

14. Bandage pneumatique ou non pneumatique comprenant une composition de caoutchouc selon l'une quelconque des revendications 1 à 12.

## Patentansprüche

1. Kautschukzusammensetzung auf Basis von mindestens:
• einem Dienelastomer;
• einem verstärkenden Füllstoff;
• einem Vernetzungssystem;
• zwischen 1 und 30 phe eines Epoxidharzes, das aus Epoxidharzen vom Tetra(glycidoxyphenyl)ethan-Typ ausgewählt ist;
• 0,5 bis 15 phe eines Härters.

2. Kautschukzusammensetzung nach dem vorhergehenden Anspruch, wobei das Epoxidharz aus Epoxidharzen der nachstehenden generischen Formel und Oligomeren der Verbindungen der generischen Formel (II) ausgewählt ist:

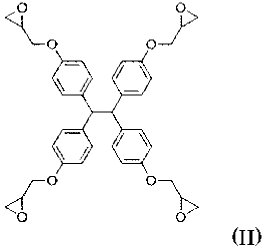

3. Kautschukzusammensetzung nach einem der vorhergehenden Ansprüche, die keine anderen härtenden Harze als ein aus Epoxidharzen vom Tetra(glycidoxyphenyl)ethan-Typ ausgewähltes Epoxidharz umfasst.

4. Kautschukzusammensetzung nach einem der vorhergehenden Ansprüche, wobei der Gehalt an Epoxidharz zwischen 10 und 25 phe liegt.

5. Kautschukzusammensetzung nach einem der vorhergehenden Ansprüche, wobei der Härter aus aromatischen Diaminen, aliphatischen Diaminen, Anhydrid und Harnstoffen ausgewählt ist.

6. Kautschukzusammensetzung nach einem der vorhergehenden Ansprüche, wobei der Härter aus aromatischen Diaminen und Harnstoffen ausgewählt ist.

7. Kautschukzusammensetzung nach einem der vorhergehenden Ansprüche, wobei es sich bei dem Härter um einen aromatischen Diamin-Härter handelt, der aus den nachstehenden Verbindungen und Mischungen dieser Verbindungen ausgewählt ist:

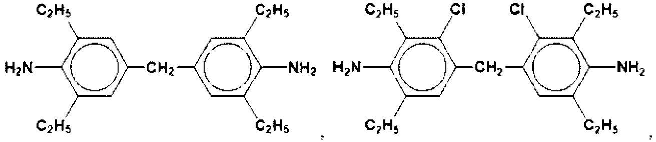

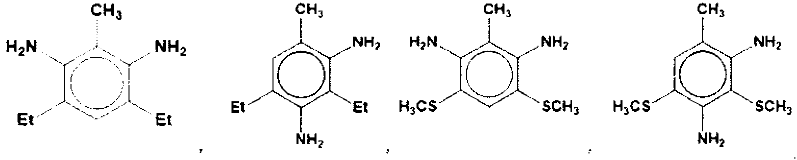

8. Kautschukzusammensetzung nach Anspruch 5 oder 6, wobei die Harnstoffe aus Carbamid-, N,N'-Dimethylharnstoff-, Ethylenharnstoff-, N-Phenylharnstoff- und 1,3-Diphenylharnstoff-Verbindungen ausgewählt sind und vorzugsweise aus Carbamid-, N,N'-Dimethylharnstoff-, N-Phenylharnstoff- und 1,3-Diphenylharnstoff-Verbindungen ausgewählt sind.

9. Kautschukzusammensetzung nach einem der Ansprüche 1 bis 4, wobei der Härter aus Dimethylthiotoluoldiamin-, Carbamid- und N,N'-Dimethylharnstoff-Verbindungen ausgewählt ist und vorzugsweise aus Dimethylthiotoluoldiamin- und Carbamid-Verbindungen ausgewählt ist.

10. Kautschukzusammensetzung nach einem der vorhergehenden Ansprüche, wobei die Menge des Härters in der Kautschukzusammensetzung in einem Bereich von 0,5 bis 10 phe und vorzugsweise in einem Bereich von 0,5 bis 8 phe liegt.

11. Kautschukzusammensetzung nach einem der vorhergehenden Ansprüche, wobei der Gehalt an Dienelastomer 50 bis 100 phe, weiter bevorzugt 60 bis 100 phe, weiter bevorzugt 70 bis 100 phe, noch weiter bevorzugt 80 bis 100 phe und ganz besonders bevorzugt 90 bis 100 phe beträgt.

12. Kautschukzusammensetzung nach dem vorhergehenden Anspruch, wobei es sich bei dem Dienelastomer um ein Isoprenelastomer handelt.

13. Kautschukerzeugnis oder -halbzeug, umfassend eine Kautschukzusammensetzung nach einem der vorhergehenden Ansprüche.

14. Luftreifen oder Vollreifen, umfassend eine Kautschukzusammensetzung nach einem der Ansprüche 1 bis 12.

## Claims

1. Rubber composition based on at least:
• one diene elastomer;
• a reinforcing filler;
• a crosslinking system;
• between 1 and 30 phr of an epoxy resin selected from tetra(glycidoxyphenyl)ethane epoxy resins;
• from 0.5 to 15 phr of a hardener.

2. Rubber composition according to the preceding claim, in which the epoxy resin is selected from epoxy resins having the following generic formula and oligomers of the compounds of generic formula (II):

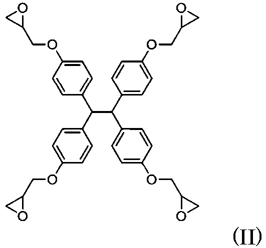

3. Rubber composition according to any one of the preceding claims, comprising no curing resins other than an epoxy resin selected from tetra(glycidoxyphenyl)ethane epoxy resins.

4. Rubber composition according to any one of the preceding claims, in which the epoxy resin content ranges from 10 to 25 phr.

5. Rubber composition according to any one of the preceding claims, in which the hardener is selected from aromatic diamines, aliphatic diamines, anhydride and ureas.

6. Rubber composition according to any one of the preceding claims, in which the hardener is selected from aromatic diamines and ureas.

7. Rubber composition according to any one of the preceding claims, in which the hardener is an aromatic diamine hardener selected from the compounds below and mixtures of these compounds:

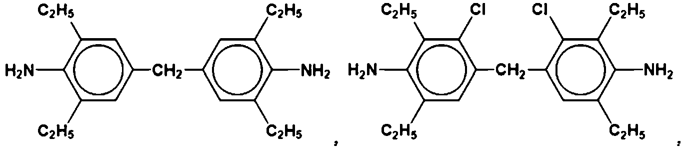

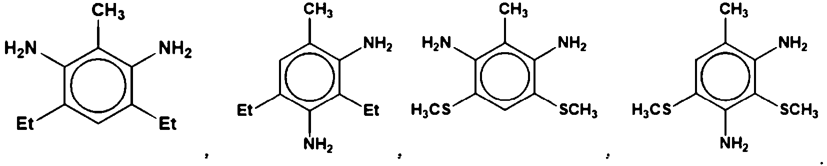

8. Rubber composition according to Claim 5 or 6, in which the ureas are selected from carbamide, N,N'-dimethylurea, ethyleneurea, N-phenylurea and 1,3-diphenylurea compounds, preferably selected from carbamide, N,N'-dimethylurea, N-phenylurea and 1.3-diphenylurea compounds.

9. Rubber composition according to any one of Claims 1 to 4, in which the hardener is selected from dimethylthiotoluenediamine, carbamide and N,N'-dimethylurea compounds, preferentially from dimethylthiotoluenediamine and carbamide compounds.

10. Rubber composition according to any one of the preceding claims, in which the amount of hardener in the rubber composition is within a range extending of from 0.5 to 10 phr, preferably within a range extending from 0.5 to 8 phr.

11. Rubber composition according to any one of the preceding claims, in which the diene elastomer content is from 50 to 100 phr, more preferentially from 60 to 100 phr, more preferentially from 70 to 100 phr, even more preferentially from 80 to 100 phr and very preferentially from 90 to 100 phr.

12. Rubber composition according to the preceding claim, in which the diene elastomer is an isoprene elastomer.

13. Finished or semi-finished rubber article comprising a rubber composition according to any one of the preceding claims.

14. Pneumatic or non-pneumatic tyre comprising a rubber composition according to any one of Claims 1 to 12.
